# EUROPEAN PATENT SPECIFICATION

(11) **EP 2 938 112 B1**
(45) Date of publication and mention of the grant of the patent: **30.01.2019**
(21) Application number: 15001120.3
(22) Date of filing: 16.04.2015
(51) Int. Cl.: H04W 12/06, H04L 29/06, H04W 4/00, G06F 21/32, H04L 9/32, H04W 4/80

(54) **PORTABLE AUTHORIZATION DEVICE**
TRAGBARE AUTORISIERUNGSVORRICHTUNG
DISPOSITIF D'AUTORISATION PORTATIF

(30) Priority: 22.04.2014 US 201461982813 P; 17.11.2014 US 201414543843
(43) Date of publication of application: 28.10.2015
(73) Proprietor: NXP B.V., 5656 AG Eindhoven (NL)
(72) Inventor: Chen, Xuemin, Rancho Santa Fe, CA 92067 (US); Kellerman, Marcus, Poway, CA 92064 (US); Hulvey, Robert, Redondo Beach, CA 90277 (US); Walley, John, Ladera Ranch, CA 92694 (US)
(74) Representative: Krott, Michel

(56) References cited:
- EP-A1- 1 802 071
- US-A1- 2011 296 510

## Description

### TECHNICAL FIELD

The present description relates generally to an authorization device, and a portable authorization device, such as a wearable authorization device, for subscriber services.

### BACKGROUND

Subscriber services, such as online streaming video services, online streaming audio services, cable television services, etc., are increasing in popularity. A user who subscribes to such services may use their authorization credentials to access the service, such as via a computer, a television, or other output devices. Some services, such as cable television services, may utilize specific hardware, such as a set-top box, to provide access to the service. Thus, a user who subscribes to such a service may only be able to access the service when in proximity to the set-top box. Other services, such as streaming video services, may utilize service-specific applications to provide access to the service.

US 2011/0296510 A1 refers to protecting user credentials using an intermediary component. An access component sends an access request to the intermediary component, the access request being a request to access a service or resource without credentials of a current user of the intermediary component being revealed to the access component. The intermediary component obtains user credentials, for the current user, that are associated with the service or resource. The access request and the user credentials are sent to the service or resource, and in response session state information is received from the service or resource. The session state information is returned to the access component, which allows the access component and the service or resource to communicate with one another based on the session state information and independently of the first component.

EP 1 802 071 A refers to apparatuses and a computer program for connecting a visitor's device to a network and enforcing a security policy based on the personalization data. For example an apparatus for connecting a computing device of a visitor to a computer network of an entity which wishes to limit access to its network, said apparatus comprising: i) a personalizing unit for enabling the entering of personalization data by an administrator to personalize said apparatus for said visitor, whereas said personalization data are stored in said personalizing unit or entered therein via a smartcard to identify said apparatus as belonging to a certain visitor, ii) a first access unit comprising a first interface for enabling said visitor to access said apparatus through said first interface, iii) a second access unit comprising a second interface for enabling said apparatus to access said computer network through said second interface based on said personalization data, and a iv) filtering unit for filtering the traffic between said first and said second interfaces to thereby enforce a security policy which is based on said personalization data to thereby enable said visitor to access said computing network of said entity through a path comprising said first interface and said second interface while enforcing said security policy.

However, the service-specific applications may not be available on every output device. Accordingly, a user who subscribes to such a service may only be able to access to the service when in proximity to an output device for which a service-specific application is available.

### BRIEF SUMMARY OF THE INVENTION

According to an aspect, a portable authorization device comprises:
a memory that is configured to store an identifier and a plurality of security keys corresponding to a plurality of services associated with the identifier; and
at least one circuit that is configured to:
   receive, from a service accessor device, a request to access one of the plurality of services;
   authenticate with the one of the plurality of services using at least the identifier and the one of the plurality of security keys corresponding to the one of the plurality of services;
   sign the request based at least on the one of the plurality of security keys corresponding to the one of the plurality of services; and
   provide the signed request to the one of the plurality of services,
      wherein the request comprises a request to access content provided by the one of the plurality of services and the request is encrypted based at least on the one of the plurality of security keys corresponding to the one of the plurality of services, wherein the request comprises a network identifier associated with the service accessor device, the at least one circuit is further configured to:
   receive, from the one of the plurality of services, a confirmation that the request has been granted;
   provide, to the service accessor device, an indication that the requested content will be provided to the service accessor device via the network identifier associated with the service accessor device;
   monitor a proximity of the service accessor device to the portable authorization device; and
   notify the one of the plurality of services when the service accessor device is not proximal to the portable authorization device.

Advantageously, the at least one circuit is further configured to:
receive, from the one of the plurality of services, an encryption key for accessing the requested content; and
provide, to the service accessor device, the encryption key for accessing the requested content. Advantageously, the at least one circuit is further configured to:
receive, from the one of the plurality of services, the requested content encrypted with the one of the plurality of security keys;
decrypt the requested content using at least the one of the plurality of security keys; and
provide the decrypted requested content to the service accessor device.

Advantageously, the content comprises at least one of: a user interface configuration for the service accessor device, an audio stream, or a video stream.

Advantageously, the at least one circuit is further configured to:
discover the service accessor device; and
provide a beacon for discovery by the service accessor device.

Advantageously, the memory comprises a secure element that is configured to store the plurality of security keys.

Advantageously, the plurality of security keys are inaccessible external to the secure element.

Advantageously, the device is configured to be attached to a body of a person and the at least one circuit is further configured to:
receive at least one biometric data item from the person; and
authenticate the person as an authorized user of the device based at least in part on the at least one biometric data item.

Advantageously, the identifier is indicative of an identity of at least one of the device or a user associated with the device.

Advantageously, the at least one circuit is further configured to:
register with the one of the plurality of services using at least the identifier; and
receive the one of the plurality of security keys corresponding to the one of the plurality of services upon registering with the one of the plurality of services.

According to an aspect, a computer program product is provided comprising instructions stored in a tangible computer-readable storage medium, the instructions, when the program is being executed by a system comprising a portable authorization device and a service accessor device, cause the portable authorization device to:
receive, from a service accessor device via a first network connection, a request to access a service provided by a service provider;
authenticate with a service provider on behalf of the service accessor device;
notify the service accessor device when the first network connection with the service accessor device has been disconnected;
monitor a distance from the service accessor device;
terminate the first network connection when the distance from the service accessor device exceeds a threshold; and
cause the service accessor device to access a service provided by the service provider via a second network connection between the service provider and the service accessor device;.

Advantageously, the first network connection is configured exclusively for communication over a short distance.

### BRIEF DESCRIPTION OF THE DRAWINGS

Certain features of the subject technology are set forth in the appended claims. However, for purpose of explanation, several embodiments of the subject technology are set forth in the following figures.
FIG. 1 illustrates an example network environment that may implement one or more portable authorization devices in accordance with one or more implementations.
FIG. 2 illustrates an example portable authorization device in accordance with one or more implementations.
FIG. 3 illustrates an example portable authorization device in accordance with one or more implementations.
FIG. 4 illustrates a flow diagram of an example process of a portable authorization device in accordance with one or more implementations.
FIG. 5 illustrates a flow diagram of an example process of a service accessor device in accordance with one or more implementations.
FIG. 6 illustrates a diagram of an example data flow in accordance with one or more implementations.
FIG. 7 conceptually illustrates an example electronic system with which one or more implementations of the subject technology can be implemented.

### DETAILED DESCRIPTION

The detailed description set forth below is intended as a description of various configurations of the subject technology and is not intended to represent the only configurations in which the subject technology may be practiced. The appended drawings are incorporated herein and constitute a part of the detailed description. The detailed description includes specific details for the purpose of providing a thorough understanding of the subject technology. However, the subject technology is not limited to the specific details set forth herein and may be practiced using one or more implementations. In one or more instances, structures and components are shown in block diagram form in order to avoid obscuring the concepts of the subject technology.

The subject portable authorization device allows a user to transport, e.g. wear, their authorization credentials for one or more subscriber services so that the user can access the services that they subscribe to via any network connected service accessor device, such as an output device. The portable authorization device may securely store an identifier associated with the user (and/or the portable authorization device) and authentication keys for the services that the user subscribes to. The portable authorization device may receive requests to access a service, such as from a network-connected service accessor device and, in response to the requests, may authenticate with the service using the identifier and/or the authentication key for the service.

After authenticating with the service, the portable authorization device may facilitate providing the service to the user, either directly or indirectly, via the network connected service accessor device, such as an output device. The portable authorization device may then operate in conjunction with the service accessor device and/or the service to verify, on a periodic basis, that the user is still in proximity to the service accessor device. The portable authorization device may notify the service when the user is no longer within proximity of the service accessor device, at which time the service accessor device's access to the service may be revoked. In one or more implementations, the service accessor device may stop providing service to the user when the portable authorization device is no longer within proximity of the service accessor device, e.g. without receiving notification thereof from the portable authorization device.

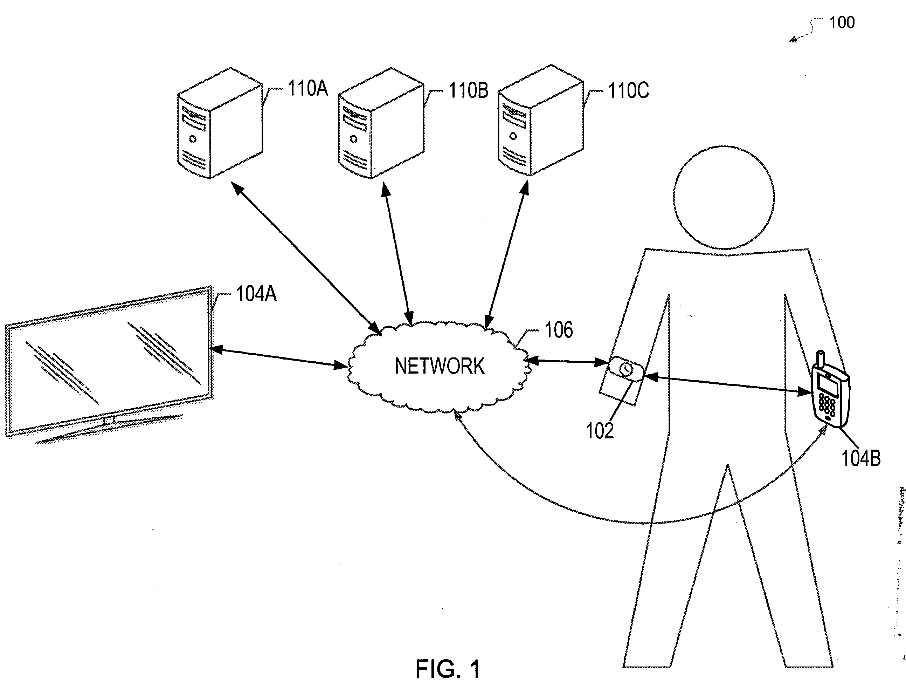

FIG. 1 illustrates an example network environment 100 that may implement one or more portable authorization devices in accordance with one or more implementations. Not all of the depicted components may be used, however, and one or more implementations may include additional components not shown in the figure. Variations in the arrangement and types of the components may be made without departing from the spirit or scope of the claims as set forth herein. Additional, different or fewer components may be provided.

The network environment 100 includes a network 106, one or more service accessor devices 104A-B, a portable authorization device 102, and one or more service provider servers 110A-C. The network 106 may include, and/or may be communicatively coupled to, one or more of the Internet, a private network, a wearable devices network, an internet of things network, or other networks. The network 106 may include one or more wired or wireless network devices that facilitate device communications of the portable authorization device 102, the service accessor devices 104A-B, and/or the service provider servers 110A-C, such as switch devices, router devices, relay devices, etc., and/or may include one or more servers. In one or more implementations, the portable authorization device 102 may establish a direct network connection, e.g. via Bluetooth wireless technology, Wi-Fi Direct, etc., with one or more of the service accessor devices 104A-B, such as the service accessor device 104B as depicted in Fig. 1, and/or one or more of the service provider servers 110A-C, without communicating through the network 106.

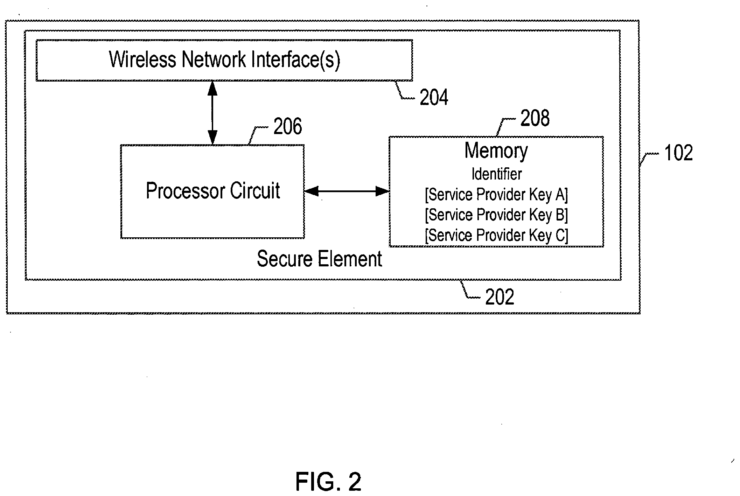

The portable authorization device 102 is depicted in Fig. 1 as a smart watch. However, the portable authorization device 102 may be any portable device, including any wearable device, such as a smart ring device, a smart glasses device, a smart necklace device, or generally any wearable device, a mobile device, such as a smart phone, a tablet device, a computing device, or generally any portable device. One or more example portable authorization devices 102 are discussed further below with respect to Figs. 2-4 and 6.

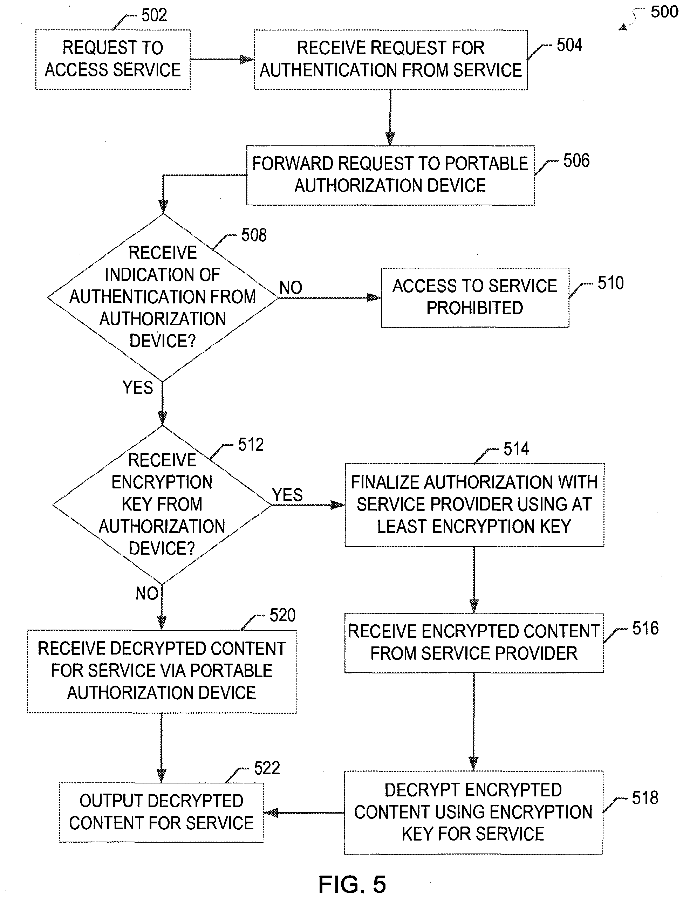

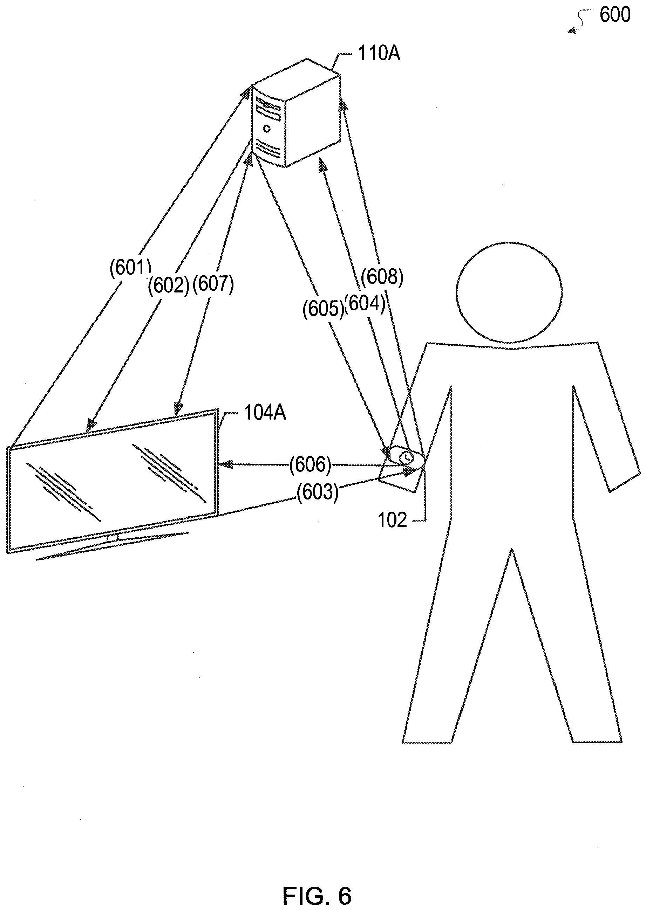

The service accessor device 104A is depicted in Fig. 1 as an output device, such as a display device, and the service accessor device 104B is depicted in Fig. 1 as a mobile device, such as a smart phone. However, the service accessor devices 104A-B may be any network connectable devices that are capable of accessing a service provided by, e.g. one or more of the service provider servers 110A-C. One or more example service accessor devices 104A-B are discussed further below with respect to Figs. 5 and 6.

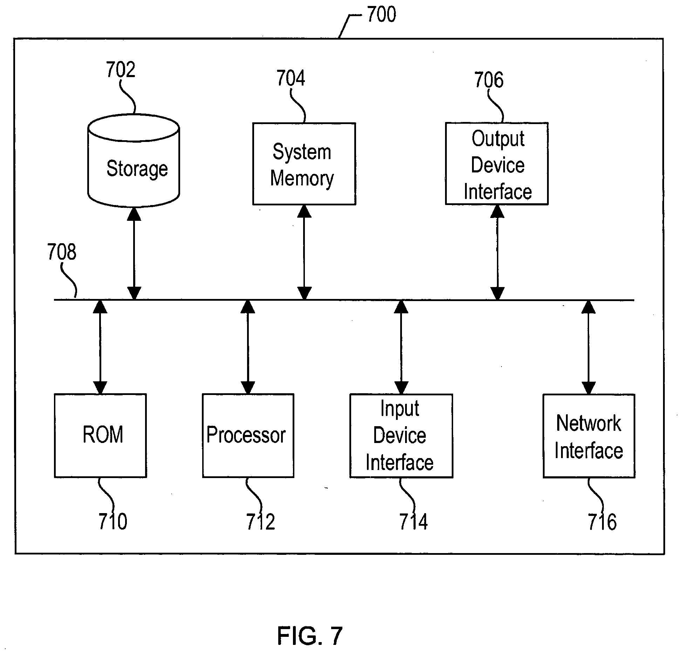

The service provider servers 110A-C may provide services that are accessible to the service accessor devices 104A-B, such as content services, e.g. video streaming services, audio streaming services, etc., and also personalization services, such as cloud-based services that store user preferences with respect to operating systems, etc. In one or more implementations, one or more of the portable authorization device 102, the service accessor devices 104A-B, and/or the service provider servers 110A-C, may be, and/or may include all or part of, the electronic system illustrated in Fig. 7.

The portable authorization device 102 may allow a user to transport, e.g. wear, their authorization credentials for accessing one or more services provided by the one or more service provider servers 110A-C via one or more of the service accessor devices 104A-B. The portable authorization device 102 may securely store an identifier associated with the user (and/or the device) and authentication keys for the services that the user subscribes to, e.g. as assigned by the corresponding service provider servers 110A-C.

The portable authorization device 102 may receive requests from proximal devices, such as from the service accessor devices 104A-B, such as the service accessor device 104A, to access a service provided by one or more of the service provider servers 110A-C, such as the service provider server 110A, and, in response to the requests, the portable authorization device 102 may authenticate with the service provider server 110A using the identifier and/or the authentication key for the service. Upon authenticating with the service provider server 110A, the portable authorization device 102 may facilitate the service provider server 110A with providing the service to the user via the service accessor device 104A.

In one or more implementations, after authenticating with a service provider server 110A, the portable authorization device 102 may receive encrypted content from the service provider server 110A, such as encrypted video content, the content having been encrypted by the service provider server 110A using the authentication key assigned to the portable authorization device 102 and/or user by the service provider server 110A. The portable authorization device 102 may decrypt the content, using the stored authentication key assigned by the service provider server 110A, and may provide the decrypted content to the service accessor device 104A.

In one or more implementations, after authenticating with a service provider server 110A, the portable authorization device 102 may receive an encrypted encryption key from the service provider server 110A, the encryption key having been encrypted by the service provider server 110A using the authentication key assigned to the portable authorization device 102 and/or user by the service provider server 110A. The portable authorization device 102 may decrypt the encryption key using the stored authentication key assigned by the service provider server 110A, and the portable authorization device 102 may provide the decrypted encryption key to the service accessor device 104A. The portable authorization device 102 may then receive encrypted content from the service provider server 110A and may forward the encrypted content to the service accessor device 104A for decryption and display.

In one or more implementations, the encryption key may change periodically at the service provider server 110A. Thus, the service accessor device 104A may periodically check for and/or retrieve a new encryption key from the service provider server 110A, via the portable authorization device 102, in order to continue to access the service. If the portable authorization device 102 is no longer in proximity to the service accessor device 104A, then the service accessor device 104A may be unable to access the service when the next encryption key change occurs.

In one or more implementations, after authenticating with a service provider server 110A the portable authorization device 102 may facilitate and/or mediate the establishment of a direct secure connection between the service provider server 110A and the service accessor device 104A. The portable authorization device 102 may then operate in conjunction with the service accessor device 104A and/or the service provider server 110A to verify, on a periodic basis, that the user and/or the portable authorization device 102 are still in proximity to the service accessor device 104A.

In one or more implementations, the portable authorization device 102 may include, and/or may be communicatively coupled to, one or more biometric sensor devices, such as fingerprint scanning devices, heart rate measuring devices, or generally any devices that can obtain biometric data. In one or more implementations, the portable authorization device 102 may use the biometric data generated by the biometric sensor devices to verify the identity of the user and/or to verify that the user is an authorized user of the portable authentication device 102, e.g. based on historical values generated by the biometric sensor devices for the user. One or more of the biometric sensor devices may be communicatively coupled to the portable authorization device 102 via a low power communication protocol that only operates over short distances, such as Bluetooth low energy (BLE) wireless technology. Thus, the portable authorization device 102 may determine a proximity of the user to the portable authorization device 102 based on whether the portable authorization device 102 can maintain a network connection with the one or more biometric sensors, and/or based on whether a biometric sensor included in the portable authorization device 102 can obtain biometric values from the user.

In one or more implementations, the portable authorization device 102 may also be communicatively coupled to the service accessor device 104A via a low power communication protocol that only operates over short distances. The low power communication protocol may be used by the portable authorization device 102 to establish a primary network connection with the service accessor device 104A, e.g. for transmitting encrypted content, decrypted content, etc., or the low power communication protocol may be used by the portable authorization device 102 to establish a secondary network connection with the service accessor device 104A, e.g. as a control channel and/or to determine whether the service accessor device 104A is located proximally to the portable authorization device 102 while a primary network connection is established with the service accessor device 104A via another communication protocol, such as Wi-Fi. In this manner, the portable authorization device 102 can determine a proximity of the user and/or the service accessor device 104A to the portable authorization device 102, and, consequently, a proximity of the user to the service accessor device 104A.

In one or more implementations, the portable authorization device 102 may be configured to be attached to the body of a person, such as in the form of a watch, a bracelet, a ring, or generally any wearable device. The portable authorization device 102 may support multiple encryption systems, such as asymmetric/symmetric encryption systems, homomorphic encryption systems, etc. The portable authorization device 102 may include a secure element that stores the authorization keys for the services that the user subscribes to; the secure element may prevent the authorization keys from being accessible external to the portable authorization device 102. The authorization keys may be assigned to the user and/or the portable authorization device 102 by the corresponding service provider servers 110A-C, and the service provider servers 110A-C may store copies of the authorization keys that they assign, e.g. for encrypting/decrypting transmissions to/from the portable authorization device 102.

The services provided by the service provider servers 110A-C may include content services, such as video streaming services, audio streaming services, etc., and also personalization services, such as cloud-based services that store user preferences with respect to operating systems, etc. Thus, when a user who subscribes to a personalization service picks up a service accessor device 104B, such as a mobile device, a thermostat device, a remote control device, the portable authorization device 102 may authenticate with the personalization service and may facilitate personalizing the service accessor device 104B with the user preferences stored by the personalization service. The personalization services may include personalizing the layout of the display of the service accessor device 104B, such as the operating system of the mobile device, the applications/features/content available on the service accessor device 104B, etc. Thus, the personalization services may effectively allow a service accessor device 104B, such as a mobile device, to operate as a multi-logon device. Thus, any user associated with a portable authorization device 102 may touch any service accessor device 104B, such as a mobile device, a thermostat device, a remote control, and have the display of the service accessor device 104B personalized for them, e.g. the temperature of a thermostat device may automatically change to a setting associated with the user.

In one or more implementations, the personalization services may also operate in conjunction with wearable devices being worn by a user, e.g. in addition to the service accessor device 104B. For example, the configuration of the service accessor device 104B, and/or the wearable devices, may differ depending on which wearable devices the user is wearing.

In one or more implementations, the portable authorization device 102 may be activated based at least in part on biometric data collected from the user (passively or actively), such as by comparing the collected biometric data to known values and/or profiles for the user. In this manner, the portable authorization device 102, when worn by the user, may be referred to as a personalized and attached subscriber identity module (or device). The portable authorization device 102 may include multiple network interfaces for being discovered by, discovering, and/or communicating with, service accessor devices 104A-B, such as Zigbee (RF4CE), Bluetooth wireless technology, Wi-Fi, etc.

In one or more implementations, the portable authorization device 102 may be configured to provision telecommunication services, such as mobile phone services, to a service accessor device 104B, such as a mobile phone. In this manner, the portable authorization device 102 may effectively operate as a subscriber identity module (SIM), and/or a virtual SIM. For example, the portable authorization device 102 may store an authentication key and/or an identifier for a mobile network operator for which the user is a subscriber. Thus, when the user picks up a service accessor device 104B that has phone capabilities, such as a mobile phone, the portable authorization device 102 may authenticate with the mobile network operator, e.g. using the stored authentication key assigned to the user and/or portable authorization device 102 by the mobile network operator and/or the user identifier, and may facilitate provisioning the telecommunication services provided by the mobile network operator to the service accessor device 104B. In one or more implementations, the user may subscribe to multiple mobile network operators and the portable authorization device 102 may be configured to select a mobile network operator for authentication based on one or more attributes, such as the time of day, the location of the user, whether the service accessor device 104B is being used for data or voice, etc.

In one or more implementations, the portable authorization device 102 may maintain authentication of the user carrying and/or wearing the portable authorization device 102, such as based on a request, e.g. a challenge-response protocol. Alternately or in addition, the portable authorization device 102 may maintain authentication of the user carrying and/or wearing the portable authorization device 102 periodically, such as continuously monitoring the biometric information collected by the portable authorization device 102.

In one or more implementations, the portable authorization device 102 may authenticate with one or more of the service provider servers 110A-C, such as the service provider server 110A, on behalf of the service accessor device 104A. Upon authentication (e.g., user and/or service authentication) of the portable authorization device 102, the service accessor device 104A may be provided with access to one or more services provided by the service provider server 110A that the user subscribes to. In one or more implementations, the service accessor device 104A may be provided with one or more levels of access controls, determined by the user authentication and/or the service authentication of the portable authorization device 102. For example, the service accessor device 104A may be provided with limited access to the service (e.g., viewing content only and cannot modify content) when the portable authorization device 102 cannot satisfy a particular user and/or service authentication threshold, which may indicate that the authentication is not certain enough to grant access to the service and/or that the security of the portable authorization device has been compromised.

In one or more implementations, the network 106 may include a gateway device (not shown) that facilitates communications of the portable authorization device 102, the service accessor devices 104A-B, and/or the service provider servers 110A-C. In one or more implementations, the gateway device may function as an intermediary between the service provider servers 110A-C and the portable authorization device and service accessor devices 104A-B. In one or more implementations, the portable authorization device 102 may operate in conjunction with the gateway device to facilitate the service provider servers 110A-C with providing the service to the user via one or more of the service accessor devices 104A-B. For example, the gateway device may store one or more private keys, encryption keys, etc., the gateway device may perform one or more encryptions and/or decryptions, the gateway device may transcode/encode content, and/or the gateway device may generally be used to offload processing from the portable authorization device 102.

In one or more implementations, a mobile device in proximity of the portable authorization device 102, such as the service accessor device 104B, may also be used to facilitate the portable authorization device 102 and/or to offload processing from the portable authorization device 102. In one or more implementations, the mobile device may include an application for controlling/accessing/facilitating the portable authorization device 102 and/or associated processes.

In one or more implementations, the portable authorization device 102 may store security keys, such as private keys, public keys, symmetric keys, secret keys, etc., user identification data (e.g. biometric data), and/or identifiers for multiple different users. The portable authorization device 102 may automatically identify and authenticate a particular user when worn or handled by the user, e.g. based on biometric data collected from the user and/or a challenge response protocol. The portable authorization device 102 may then facilitate the identified and authenticated user with accessing one or more services that the user subscribes to, e.g. via one or more of the service accessor devices 104A-B. In one or more implementations, a memory of the portable authorization device 102 may include separate secure partitions (and/or separate secure memory elements) for storing the keys, user identification data, and/or identifiers of the different users.

In one or more implementations, the service accessor devices 104A-B may be wearable devices that are activated/authorized for operation by the portable authorization device 102, e.g. after authenticating with a corresponding one of the service provider servers 110A-C. The activated configuration and/or features of the wearable devices may depend on the level of service that the user is authorized for. For example, a wearable device may be capable of heart rate monitoring and sleep monitoring, but a particular user may only be authorized to access the heart rate monitoring functionality. Thus, the portable authorization device 102 may only activate the heart rate monitoring functionality when the wearable device is worn by the particular user.

FIG. 2 illustrates an example portable authorization device 102 in accordance with one or more implementations. Not all of the depicted components may be used, however, and one or more implementations may include additional components not shown in the figure. Variations in the arrangement and type of the components may be made without departing from the spirit or scope of the claims as set forth herein. Additional components, different components, or fewer components may be provided.

The example portable authorization device 102 includes a secure element 202. The secure element 202 includes one or more wireless network interfaces 204, a processor circuit 206, and a memory 208. The memory 208 may be any memory, such as dynamic random-access memory (DRAM), and may securely store an identifier and one or more keys assigned to the portable authorization device 102 by one or more of the service provider servers 110A-C. In one or more implementations, the identifier may be a unique identifier that is associated with the portable authorization device 102 and/or a user carrying and/or wearing the portable authorization device 102. In one or more implementations, the unique identifier may be stored in the memory 208 at the time that the portable authorization device 102 is manufactured, e.g. before the portable authorization device is obtained by the user.

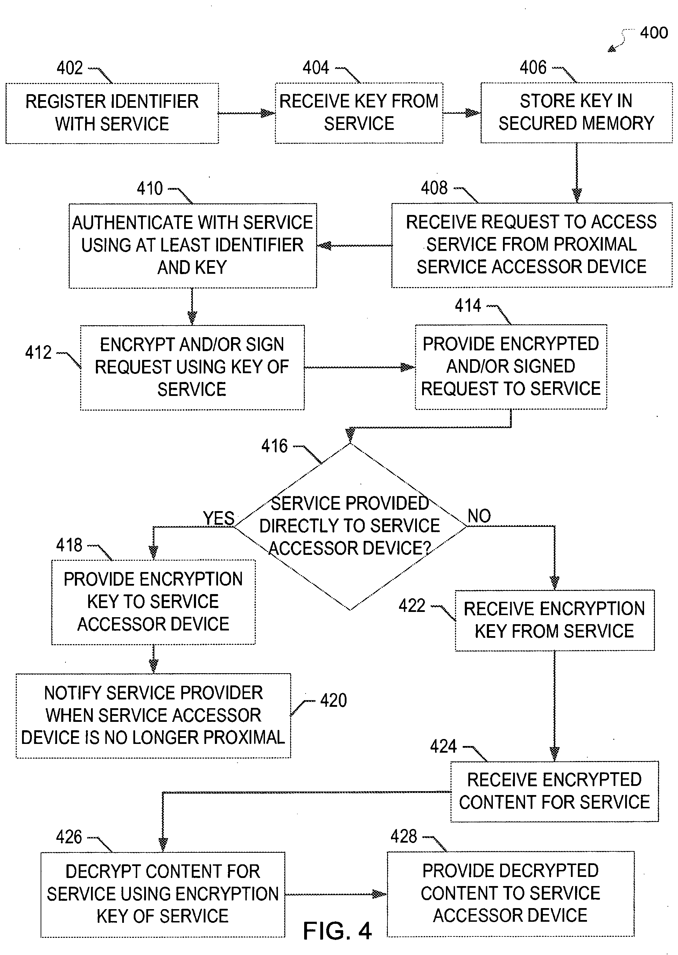

In one or more implementations, the identifier may be created after the portable authorization device 102 is manufactured and/or the identifier may be associated with a user carrying and/or wearing the portable authorization device 102. In one or more implementations, the identifier may include personal identification information of the user, such as driver's license information, biometric information, user name, email address, and/or other forms of personal identification information. In one or more implementations, the identifier may not be unique by itself, but may be unique in conjunction with one or more other attributes of the user, such as date of birth, social security number, etc. The identifier may be registered with the service that the user subscribes to, as is described further below with reference to Fig. 4.

The one or more keys stored in memory 208, such as private keys, public keys, etc., may be assigned by one or more service providers 110A-C and each key may be uniquely associated with the identifier and the service the user subscribes to. For example, as depicted in Fig. 2, service provider key A may be assigned by the service provider server 110A. The service provider key A may be uniquely associated with the identifier and the service (e.g., service A) that the user subscribes to via the service provider server 110A. The service provider servers 110A-C may store a copy of the key that they assign, e.g. for encrypting/decrypting transmissions to/from the portable authorization device 102. In one or more implementations, the service may generate a public/private key-pair, such as generated by the service provider server 110A. The portable authorization device 102 may generate its own public/private key-pair. A symmetric key may be established by exchanging the public keys generated by the service provider server 110A and the portable authorization device 102, such as using a Diffie-Hellman key exchange. The symmetric key may be used for subsequent communications between the service provider server 110A and the portable authorization device 102.

In one or more implementations, the one or more keys may be inaccessible external to the secure element 202. For explanatory purposes, the memory 208 of Fig. 2 is illustrated as storing three keys; however, the memory 208 (and/or other memory) may store any number of keys, such as private keys, public keys, symmetric keys, etc., as well as groupings of different keys, such as private keys, public keys, symmetric keys, etc.

The processor circuit 206 may facilitate user authentication of the user carrying and/or wearing the portable authorization device 102, e.g. to ensure that the user carrying and/or wearing the portable authorization device 102 is an authenticated user. The portable authorization device 102 may continuously maintain authentication of the user carrying and/or wearing the portable authorization device 102, such as using challenge-response protocol, passively monitoring biometric data received from proximal biometric sensor devices and comparing the data to known biometric profiles for the user, and/or any combination thereof. For example, the processor circuit 206 may compare the passively collected biometric data to stored historical biometric profile data for the user to authenticate the user carrying and/or wearing the portable authorization device 102. In one or more implementations, if the biometric profile data of the user is sufficiently unique, the biometric profile data may serve as the identifier and the processor circuit 206 may compare the passively collected biometric data to the identifier in order to authenticate the user.

Once the user carrying and/or wearing the portable authorization device 102 has been authenticated, the processor circuit 206 may facilitate service authentication of the portable authorization device 102 with one or more services the user subscribes to, as is described further below with reference to Fig. 4. In one or more implementations, the service authentication of the portable authorization device 102 with one or more services the user subscribes to may be revoked based on a determination that the user carrying and/or wearing the portable authorization device 102 can no longer be authenticated.

In one or more implementations, the portable authorization device 102 may not include an encoder/transcoder and/or an encryption/decryption module, as depicted in Fig. 2, such as to conserve area, e.g. to facilitate smaller packaging for smaller wearable devices, such as smart rings, smart necklaces, smart watches, etc., and/or to conserve power, e.g. for low-power operation of wearable devices with small power supplies, such as smart rings, smart necklaces, smart watches, etc. In the one or more implementations where the portable authorization device 102 does not include an encoder/transcoder and/or encryption/decryption module, the portable authorization device 102 may authenticate with the service provider server 110A on behalf of the service accessor device 104A and, after authenticating, may facilitate the service accessor device 104A with access to one or more services provided by the service provider server 110A.

In one or more implementations, the portable authorization device 102 may facilitate establishing a direct secure connection between the service provider server 110A and the service accessor device 104A. For example, the portable authorization device 102 may receive a security token, such as a nonce, from the service provider server 110A and may transmit the security token to the service accessor device 104A. The service accessor device 104A may then provide the security token back to the service provider server 110A. In one or more implementations, the portable authorization device 102 may also forward one or more encryption keys from the service provider server 110A to the service accessor device 104A and may then forward encrypted content from the service provider server 110A to the service accessor device 104A. In one or more implementations, the portable authorization device 102 may facilitate establishing a direct connection between the service provider server 110A and the service accessor device 104A for direct transmission of the encrypted content and/or encryption keys.

In one or more implementations, one or more of the secure element 202, the wireless network interfaces 204, the processor circuit 206, and the memory 208 may be implemented in software (e.g., subroutines and code). In one or more implementations, one or more of the secure element 202, the wireless network interfaces 204, the processor circuit 206, and the memory 208 may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both. Additional features and functions of these modules according to various aspects of the subject technology are further described in the present disclosure.

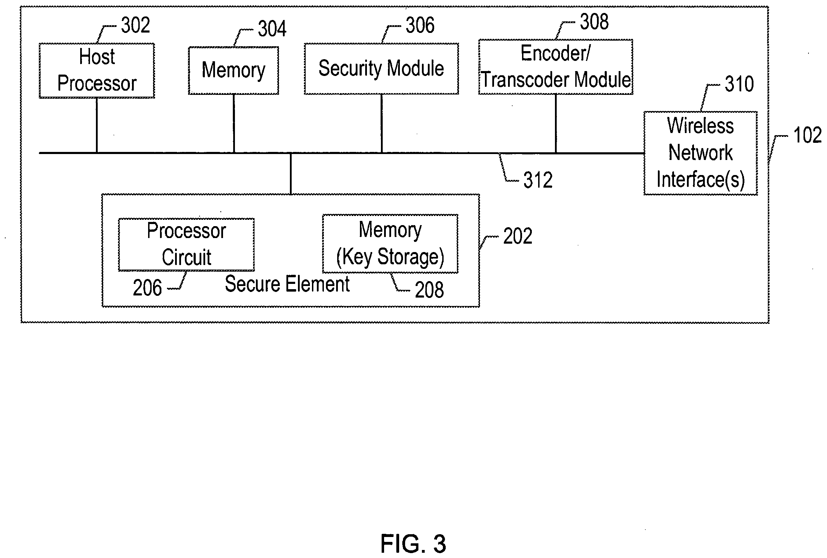

FIG. 3 illustrates an example portable authorization device 102 in accordance with one or more implementations. Not all of the depicted components may be used, however, and one or more implementations may include additional components not shown in the figure. Variations in the arrangement and type of the components may be made without departing from the spirit or scope of the claims as set forth herein. Additional components, different components, or fewer components may be provided.

The example portable authorization device 102 includes the secure element 202, a host processor 302, a memory 304, a security module 306, an encoder/transcoder module 308, one or more wireless network interfaces 310, and a bus 312. The secure element 202 includes the processor circuit 206 and the memory 208. The security module 306 may perform one or more encryptions/decryptions, such as using asymmetric encryption, symmetric encryption, homomorphic encryption, and the like. The security module 306 may access one or more keys including, for example, public keys, private keys, symmetric keys, and/or hash keys, e.g. from the memory 304 and/or the memory 208, to perform one or more security operations including, for example, encryptions/decryptions, authorizations, and/or authentications.

In one or more implementations, the security module 306 may decrypt information received from one or more of the service provider servers 110A-C, such as the service provider server 110A, using the service provider key(s), such as private key(s), public key(s) and/or symmetric key(s) (e.g., assigned and/or generated by the service provider server 110A) that are stored in the secure element 202. In one or more implementations, the security module 306 may receive an encrypted encryption key from the service provider server 110A, the encryption key having been encrypted by the service provider server 110A using a copy of the key stored in the memory 208. The security module 306 may decrypt the encryption key using the stored key assigned by the service provider server 110A, and the portable authorization device 102 may provide the decrypted encryption key to the service accessor device 104A (e.g., via wireless network interface 310). In this manner, the portable authorization device 102 can provide a temporary encryption key to the service accessor device 104A for temporarily accessing content provided by the service provider server 110A without having to provide (and thereby possibly compromise) the key assigned to the portable authorization device 102 by the service provider server 110A.

In one or more implementations, the security module 306 may receive content (e.g., video content) from the service provider server 110A that is encrypted using the key that was assigned to the portable authorization device 102 by the service provider server 110A. The security module 306 may decrypt the content using the assigned key (e.g. as stored in the memory 208 and/or 304) and may provide the decrypted content to the service accessor device 104A (e.g., via wireless network interface 310).

In one or more implementations, the encoder/transcoder module 308 may transcode and/or encode the received content (e.g., video and audio streams) from the one or more service provider servers 110A-C, e.g. to alter the format of the content in accordance with the display/decoding capabilities of the one or more of the service accessor devices 104-B. The portable authorization device 102 may directly communicate with one or more of the service accessor devices 104-B via the wireless network interface(s) 310, such as using Bluetooth wireless technology, near field communication (NFC), Wi-Fi Direct, and the like.

In one or more implementations, one or more of the secure element 202, the host processor 302, the memory 304, the security module 306, the encoder/transcoder module 308, the wireless network interfaces 310, the bus 312, the processor circuit 206, and the memory 208 may be implemented in software (e.g., subroutines and code). In one or more implementations, one or more of the secure element 202, the host processor 302, the memory 304, the security module 306, the encoder/transcoder module 308, the wireless network interfaces 310, the bus 312, the processor circuit 206, and the memory 208 may be implemented in hardware (e.g., an ASIC, a FPGA, a PLD, a controller, a state machine, gated logic, discrete hardware components, or any other suitable devices) and/or a combination of both. Additional features and functions of these modules according to various aspects of the subject technology are further described in the present disclosure.

FIG. 4 illustrates a flow diagram of an example process 400 of a portable authorization device 102 in accordance with one or more implementations. For explanatory purposes, the example process 400 is primarily described herein with reference to portable authorization device 102 of Figs. 1-3; however, the example process 400 is not limited to the portable authorization device 102 of Figs. 1-2, and the example process 400 may be performed by one or more components of the portable authorization device 102. Further for explanatory purposes, the blocks of the example process 400 are described herein as occurring in serial, or linearly. However, multiple blocks of the example process 400 may occur in parallel. In addition, the blocks of the example process 400 may be performed a different order than the order shown and/or one or more of the blocks of the example process 400 may not be performed.

The portable authorization device 102 registers an identifier with a service, e.g. via one of the service provider servers 110A-C, such as the service provider server 110A (402). For example, a user may wish to associate the identifier associated with the portable authorization device 102 and/or the user with a service that the user subscribes to.

The portable authorization device 102 receives a key, such as a private key, a public key, a symmetric key, etc., from the service, e.g. via one of the service provider servers 110A-C, such as the service provider server 110A (404). In one or more implementations, upon registering the identifier with the service, one or more keys associated with the service may be assigned to the portable authorization device 102 by the corresponding service provider server, e.g. the service provider server 110A. The key may be and/or may include a cryptographic key and/or may be uniquely associated with the registered identifier with the service. The service provider servers 110A-C may store a copy of the key that they assign, e.g. for encrypting/decrypting transmissions to/from the portable authorization device 102. The portable authorization device 102 stores the key in a secure memory, e.g. memory 208 in the secure element 202 (406). In one or more implementations, the key may be inaccessible external to the secure element 202 and/or may not be provided externally from the portable authorization device 102.

The portable authorization device 102 receives a request to access service, e.g. provided by the service provider server 110A, from a proximal service accessor device 104A (408). The portable authorization device 102 may discover a proximal service accessor device 104A via one or more short-range communication protocols, such as Bluetooth wireless technology and/or near field communication (NFC). In one or more implementations, the portable authorization device 102 may provide a beacon for discovery by the proximal service accessor device 104A. In one or more implementations, the request may include a network identifier associated with the proximal service accessor device 104A and/or the request may include a request to access content provided by the service. The content may include, for example, a user interface configuration for the proximal service accessor device 104A, a remote user interface that is provided to the proximal service accessor device 104A, an audio stream, and/or a video stream. The user interface configuration of the proximal service accessor device 104A may include user preferences stored in the cloud-based services, such as with respect to operating systems. The user preferences stored in the cloud-based services may be received and/or selected by the user. In one or more implementations, the user preferences stored in the cloud-based services may be determined by the historical activities of the user.

In one or more implementations, upon receiving the request, and/or continuously thereafter, the portable authorization device 102 and/or the proximal service accessor device 104A may monitor the proximity of the proximal service accessor device 104A to the portable authorization device 102. As described above, the encryption key may change periodically at the service provider server 110A, and the proximal service accessor device 104A may periodically retrieve a new encryption key from the service provider server 110A via the portable authorization device 102. If the portable authorization device 102 is no longer in proximity to the proximal service accessor device 104A, then the access to the service may not be provided when the next encryption key change occurs.

In one or more implementations, the portable authorization device 102 may monitor the received signal strength indicator (RSSI) from the service accessor device 104A to determine if the service accessor device 104A is in proximity of the portable authorization device 102. The portable authorization device 102 may notify the service provider server 110A when the service accessor device 104A is not proximal to the portable authorization device 102 (e.g., RSSI <-90dB).

In response to the request, the portable authorization device 102 authenticates with the service, e.g. via the service provider server 110A, using at least the identifier and the key assigned by the service provider server 110A (410). The service provider server 110A may receive the identifier from the portable authorization device 102 and/or determine if the identifier is registered with a service provided by the service provider server 110A.

Upon authentication with the service, the portable authorization device 102 signs and/or encrypts the request to access service using one or more keys including, for example, public keys, private keys, symmetric keys, and/or hash keys, of the service stored in the secured memory (412), e.g. via the security module 306. The portable authorization device 102 provides the signed and/or encrypted request to the service (414), e.g. via network 106. In response to the signed and/or encrypted request, one of the service provider server 110A-C corresponding to the service, such as the service provider server 110A may decrypt and/or verify the signature of the request by using the one or more keys including, for example, public keys, private keys, symmetric keys, and/or hash keys, assigned to the registered identifier by the service.

If the service will be provided directly to the proximal service accessor device 104A (416), an encryption key for accessing the service may be provided to the proximal service accessor device 104A, e.g. directly by the service provider server 110A and/or via the portable authorization device 102 (418). For example, the portable authorization device 102 may receive, from the service provider server 110A, a confirmation that the request has been granted. The portable authorization device 102 may then provide, to the service accessor device 104A, an indication that the requested content will be provided directly to the service accessor device 104A, such as via a network identifier associated with the service accessor device 104A that was included in the request.

In one or more implementations, the portable authorization device 102 may facilitate establishing a direct authenticated connection between the service accessor device 104A and the service provider server 110A. For example, the service provider server 110A may generate a random number and may encrypt/sign the random number using a key assigned to the portable authorization device 102. The service provider server 110A may transmit the encrypted random number to the portable authorization device 102. The portable authorization device 102 may decrypt the random number using the key assigned by the service provider server 110A and may provide the decrypted key to the service accessor device 104A. The service accessor device 104A may then transmit the random number directly to the service provider server 110A to establish a direct authenticated and/or secure connection with the service provider server 110A.

If the service is being provided directly to the service accessor device 104A, the portable authorization device 102 monitors a proximity of the service accessor device 104A, e.g. to ensure that the portable authorization device 102 is within a proximity of the service accessor device 104A. The portable authorization device 102 notifies the service provider server 110A when the service accessor device 104A is not proximal to the portable authorization device 102 (420), at which time the service provider server 110A may revoke the access to the service by the service accessor device 104A. In one or more implementations, the service provider server 110A may issue an authentication challenge directly to the service accessor device 104A, e.g. a login and/or password request, when the service accessor device 104A is no longer proximal to the portable authorization device 102. In one or more implementations, the service accessor device 104A may respond to the challenge by sending a message to the portable authorization device 102, where the message may also serve as an indication that the service accessor device 104A is in proximity to the portable authorization device 102.

If the service is not provided directly to the service accessor device 104A (416), the portable authorization device 102 receives, from the service provider server 110A, an encryption key for accessing the requested content (422). The encryption key may be encrypted using a key assigned to the portable authorization device 102 by the service provider server 110A. The portable authorization device 102 may decrypt the encrypted encryption key using the assigned key stored in the secure memory 208.

The portable authorization device 102 receives, from the service provider server 110A, encrypted content corresponding to the service (424). The portable authorization device 102 decrypts the received content using the encryption key (426). Upon decrypting the requested content, the portable authorization device 102 provides the decrypted requested content to the service accessor device 104A (428). In one or more implementations, the portable authorization device 102 may transcode, or otherwise modify, the content into a form appropriate for the service accessor device 104A before providing the content to the service accessor device 104A.

FIG. 5 illustrates a flow diagram of an example process 500 of a service accessor device in accordance with one or more implementations. For explanatory purposes, the example process 500 is primarily described herein with reference to the service accessor device 104A of Fig. 1; however, the example process 500 is not limited to the service accessor device 104A of Fig. 1, and the example process 500 may be performed by the other service accessor device 104B of Fig. 1, or any other device capable of accessing a service. Further for explanatory purposes, the blocks of the example process 500 are described herein as occurring in serial, or linearly. However, multiple blocks of the example process 500 may occur in parallel. In addition, the blocks of the example process 500 may be performed a different order than the order shown and/or one or more of the blocks of the example process 500 may not be performed.

The service accessor device 104A receives a request to access a service, such as a service provided by the service provider server 110A (502). For example, a user may request to access the service, such as an online streaming content service, via the service accessor device 104A. The service accessor device 104A may attempt to access the requested service, via the service provider server 110A, and may receive a request for authentication from the service provider server 110A (504). The service accessor device 104A forwards the request for authentication to the portable authorization device 102, such as when the service accessor device 104A does not have authorization to access the service (506).

In one or more implementations, the service accessor device 104A may identify the proximal portable authorization device 102 using one or more discovery protocols over one or more wireless network technologies, and/or the service accessor device 104A may already be paired with the portable authorization device 102. In one or more implementations, the portable authorization device 102 may authenticate with the service provider server 110A (e.g., as described above with reference to Fig. 4), and may receive an indication of whether the portable authorization device 102 was able to authenticate with the service provider server 110A (508).

If the service accessor device 104A does not receive an indication of authorization from the portable authorization device 102 (508), the service accessor device 104A is prohibited from access to the requested service (510). In one or more implementations, the service provider server 110A may issue an authentication challenge protocol directly to the service accessor device 104A when the portable authorization device 102 is unable to authenticate with the service provider server 110A.

If the service accessor device 104A receives an indication of authentication from the portable authorization device 102 (508), the service accessor device 104A determines whether an encryption key for accessing the service provided by the service provider server 110A was received, and/or will be received, from the portable authorization device 102 (512). If an encryption key is not received (512), the service accessor device 104A receives decrypted content for the service via the portable authorization device 102 (520), and outputs the decrypted content for the service (522), e.g. on a display. In one or more implementations, the service accessor device 104A may receive the decrypted content directly from the service provider server 110A.

If an encryption key is received from the portable authorization device 102 (512), the service accessor device 104A finalizes authorization with the service provider server 110A using at least the received encryption key (514). For example, the service accessor device 104A may transmit a nonce received from the portable authorization device 102 (e.g. with the encryption key) to the service provider server 110A. In one or more implementations, the service accessor device 104A may encrypt the nonce using the encryption key. The service accessor device 104A then receives encrypted content from the service provider server 110A (516). The service accessor device 104A decrypts encrypted content using the encryption key received from the portable authorization device 102 (518). The service accessor device 104A outputs the decrypted content for the service (522), e.g. on a display.

In one or more implementations, the service accessor device 104A may receive, from the portable authorization device 102, a security mechanism for accessing the service, such as an encryption key, via a first network connection with the portable authorization device 102, such as a Bluetooth connection, an NFC connection, or another communication protocol that is configured for communication over a short distance. The service accessor device 104A may then access the service from the service provider server 110A via a second network connection (distinct from the first network connection), such as a Wi-Fi connection, an Ethernet connection, etc. Thus, if the portable authorization device 102 is located more than a threshold distance away from the service accessor device 104A (e.g.., 10 meters), the portable authorization device 102 may be out of range of the first network connection and therefore the first network connection may be terminated. Upon determining that the first network connection has been terminated, the portable authorization device 102 may notify the service provider server 110A that the service accessor device 104A is no longer located proximally to the portable authorization device 102.

In one or more implementations, the service provider server 110A may periodically take action to confirm that the portable authorization device 102 is in proximity to the service accessor device 104A, e.g. the service provider server 110A may periodically change the encryption key, such that the service accessor device 104A has to periodically obtain a new encryption key via the portable authorization device 102 in order to continue accessing the service. In one or more implementations, the service provider server 110A may periodically send an authentication challenge to the service accessor device 104A and the service accessor device 104A may respond to the authentication challenge by sending a message to the portable authorization device 102.

FIG. 6 illustrates a diagram of an example data flow 600 in accordance with one or more implementations. Not all of the depicted components may be used, however, and one or more implementations may include additional components not shown in the figure. Variations in the arrangement and types of the components may be made without departing from the spirit or scope of the claims as set forth herein. Additional, different or fewer components may be provided.

The data flow 600 may include one or more of the portable authorization device 102, the service accessor device 104A, and the service provider server 110A. The data flow 600 may be initiated when the service accessor device 104A transmits a request to the service provider server 110A to access a service that is provided by the service provider server 110A (601). The service provider server 110A responds with a request for authentication to access to the service (602). The service accessor device 104A forwards the request for authentication to the portable authorization device 102 (603). In one or more implementations, the service accessor device 104A may append metadata to the request for authentication that is provided to the portable authorization device 102, such as an identifier of the service provider server 110A, the service that is being requested from the service provider server 110A, and/or an identifier of the service accessor device 104A, such as a network identifier.

The portable authorization device 102 receives the request for authentication, retrieves the stored identifier and the one or more keys including, for example, public keys, and/or private keys, symmetric keys, and/or hash keys, assigned by the service provider server 110A, encrypts the identifier and transmits the encrypted identifier to the service provider server 110A (604). The portable authorization device 102 receives an indication of authentication from the service provider server 110A (605) and notifies the service accessor device 104A that the authentication was granted (606). The portable authorization device 102 may then facilitate establishing a direct authenticated connection between the service provider server 110A and the service accessor device 104A, and the service accessor device 104A may access the requested service from the service provider server 110A (607). The portable authorization device 102 continues to monitor the proximity of the service accessor device to the portable authorization device 102, and notifies the service provider server 110A when the service accessor device 104A is no longer located proximally to the portable authorization device 102 (608).

In one or more implementations, the service provider server 110A may periodically take action to confirm that the portable authorization device 102 is in proximity to the service accessor device 104A, e.g. the service provider server 110A may periodically change the encryption key, such that the service accessor device 104A has to periodically obtain a new encryption key via the portable authorization device 102 in order to continue accessing the service. In one or more implementations, the service provider server 110A may periodically send an authentication challenge to the service accessor device 104A and the service accessor device 104A may respond to the authentication challenge by sending a message to the portable authorization device 102.

FIG. 7 conceptually illustrates an example electronic system 700 with which one or more implementations of the subject technology can be implemented. The electronic system 700, for example, may be, or may include, one or more portable or wearable devices, such as the portable authorization device 102, one or more of the service accessor devices 104A-B, one or more of the service provider servers 110A-C, a desktop computer, a laptop computer, a tablet computer, a phone, a personal digital assistant (PDA), and/or generally any electronic device. Such an electronic system 700 includes various types of computer readable media and interfaces for various other types of computer readable media. The electronic system 700 includes a bus 708, one or more processing unit(s) 712, a system memory 704, a read-only memory (ROM) 710, a permanent storage device 702, an input device interface 714, an output device interface 706, one or more network interface(s) 716, and/or subsets and variations thereof.

The bus 708 collectively represents all system, peripheral, and chipset buses that communicatively connect the numerous internal devices of the electronic system 700. In one or more implementations, the bus 708 communicatively connects the one or more processing unit(s) 712 with the ROM 710, the system memory 704, and the permanent storage device 702. From these various memory units, the one or more processing unit(s) 712 retrieves instructions to execute and data to process in order to execute the processes of the subject disclosure. The one or more processing unit(s) 712 can be a single processor or a multi-core processor in different implementations.

The ROM 710 stores static data and instructions that are utilized by the one or more processing unit(s) 712 and other modules of the electronic system 700. The permanent storage device 702, on the other hand, may be a read-and-write memory device. The permanent storage device 702 may be a non-volatile memory unit that stores instructions and data even when the electronic system 700 is off. In one or more implementations, a mass-storage device (such as a magnetic or optical disk and its corresponding disk drive) may be used as the permanent storage device 702.

In one or more implementations, a removable storage device (such as a floppy disk, flash drive, and its corresponding disk drive) may be used as the permanent storage device 702. Like the permanent storage device 702, the system memory 704 may be a read-and-write memory device. However, unlike the permanent storage device 702, the system memory 704 may be a volatile read-and-write memory, such as random access memory (RAM). The system memory 704 may store one or more of the instructions and/or data that the one or more processing unit(s) 712 may utilize at runtime. In one or more implementations, the processes of the subject disclosure are stored in the system memory 704, the permanent storage device 702, and/or the ROM 710. From these various memory units, the one or more processing unit(s) 712 retrieve instructions to execute and data to process in order to execute the processes of one or more implementations.

The bus 708 also connects to the input and output device interfaces 714 and 706. The input device interface 714 enables a user to communicate information and select commands to the electronic system 700. Input devices that may be used with the input device interface 714 may include, for example, alphanumeric keyboards and pointing devices (also called "cursor control devices"). The output device interface 706 may enable, for example, the display of images generated by the electronic system 700. Output devices that may be used with the output device interface 706 may include, for example, printers and display devices, such as a liquid crystal display (LCD), a light emitting diode (LED) display, an organic light emitting diode (OLED) display, a flexible display, a flat panel display, a solid state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

As shown in FIG. 7, bus 708 also couples electronic system 700 to one or more networks (not shown) through one or more network interface(s) 716. The one or more network interface(s) may include an Ethernet interface, a Wi-Fi interface, a multimedia over coax alliance (MoCA) interface, a reduced gigabit media independent interface (RGMII), or generally any interface for connecting to a network. In this manner, electronic system 700 can be a part of one or more networks of computers (such as a local area network (LAN), a wide area network (WAN), or an Intranet, or a network of networks, such as the Internet. Any or all components of electronic system 700 can be used in conjunction with the subject disclosure.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as application specific integrated circuits (ASICs) or field programmable gate arrays (FPGAs). In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (e.g., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration." Any embodiment described herein as "exemplary" or as an "example" is not necessarily to be construed as preferred or advantageous over other embodiments. Furthermore, to the extent that the term "include," "have," or the like is used in the description or the claims, such term is intended to be inclusive in a manner similar to the term "comprise" as "comprise" is interpreted when employed as a transitional word in a claim.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

## Claims

1. A portable authorization device (102) comprising:
a memory (208) that is configured to store an identifier and a plurality of security keys corresponding to a plurality of services associated with the identifier; and
at least one circuit (206) that is configured to:
receive, from a service accessor device (104A-B), a request to access one of the plurality of services;
authenticate with the one of the plurality of services using at least the identifier and the one of the plurality of security keys corresponding to the one of the plurality of services;
sign the request based at least on the one of the plurality of security keys corresponding to the one of the plurality of services; and
provide the signed request to the one of the plurality of services, wherein the request comprises a request to access content provided by the one of the plurality of services and the at least one circuit is further configured to encrypt the signed request based at least on the one of the plurality of security keys corresponding to the one of the plurality of services,
wherein the request comprises a network identifier associated with the service accessor device (104A-B),
the at least one circuit (206) is further configured to:
receive, from the one of the plurality of services, a confirmation that the request has been granted;
provide, to the service accessor device (1 04A-B), an indication that the requested content will be provided to the service accessor device (104A-B) via the network identifier associated with the service accessor device (104A-B);
monitor a proximity of the service accessor device (104A-B) to the portable authorization device (102); and
notify the one of the plurality of services when the service accessor device (104A-B) is not proximal to the portable authorization device (102).

2. The portable authorization device (102) of claim 1, wherein the at least one circuit (206) is further configured to:
receive, from the one of the plurality of services, an encryption key for accessing the requested content; and
provide, to the service accessor device (104A-B), the encryption key for accessing the requested content.

3. The portable authorization device of claim 1, wherein the at least one circuit (206) is further configured to:
receive, from the one of the plurality of services, the requested content encrypted with the one of the plurality of security keys;
decrypt the requested content using at least the one of the plurality of security keys; and
provide the decrypted requested content to the service accessor device (104A-B).

4. The portable authorization device (102) of any of claims 1 to 3, wherein the content comprises at least one of: a user interface configuration for the service accessor device, an audio stream, or a video stream.

5. The portable authorization device (102) of any preceding claim, wherein the at least one circuit (206) is further configured to:
discover the service accessor device (104A-B); and
provide a beacon for discovery by the service accessor device (104A-B).

6. The portable authorization device (102) of any preceding claim, wherein the memory (208) comprises a secure element (202) that is configured to store the plurality of security keys.

7. The portable authorization device (102) of any preceding claim, wherein the portable authorization device (102) is configured to be attached to a body of a person and the at least one circuit (206) is further configured to:
receive at least one biometric data item from the person; and
authenticate the person as an authorized user of the portable authorization device (102) based at least in part on the at least one biometric data item.

8. The portable authorization device (102) of any preceding claim, wherein the identifier is indicative of an identity of at least one of the portable authorization device (102) or a user associated with the portable authorization device (102) and the at least one circuit (206) is further configured to:
register with the one of the plurality of services using at least the identifier; and
receive the one of the plurality of security keys corresponding to the one of the plurality of services upon registering with the one of the plurality of services.

9. A computer program product comprising instructions stored in a tangible computer-readable storage medium, the instructions, when the program is being executed by a system comprising a portable authorization device (102) and a service accessor device (104A-B), cause the portable authorization device (102) to:
receive, from a service accessor device (104A-B) via a first network connection, a request to access a service provided by a service provider (110A-C);
authenticate with a service provider (110A- C) on behalf of the service accessor device (104A- B);
notify the service provider (110A- C) when the first network connection with the service accessor device (104A- B) has been disconnected;
monitor a distance from the service accessor device (104A- B);
terminate the first network connection when the distance from the service accessor device (104A-B) exceeds a threshold; and
the service accessor device (104A- B) to access a service provided by the service provider (110A- C) via a second network connection between the service provider (110A-C) and the service accessor device (104 A- B).

## Patentansprüche

1. Eine tragbare Autorisierungsvorrichtung (102) aufweisend:
einen Speicher (208), der konfiguriert ist zum Speichern eines Identifikators und einer Mehrzahl von Sicherheitsschlüsseln, welche einer Mehrzahl von Services entspricht, die mit dem Identifikator verknüpft sind; und
zumindest einen Schaltkreis (206), der konfiguriert ist zum:
Empfangen, von einer Serviceakzessorvorrichtung (104A-B), einer Anforderung für Zugriff auf einen der Mehrzahl von Services;
Authentifizieren mit dem einen der Mehrzahl von Services unter Verwendung von zumindest dem Identifikator und dem einen der Mehrzahl von Sicherheitsschlüsseln, der dem einen der Mehrzahl von Services entspricht;
Signieren der Anforderung basierend zumindest auf dem einen der Mehrzahl von Sicherheitsschlüsseln, welcher dem einen der Mehrzahl von Services entspricht; und
Bereitstellen der signierten Anforderung für den einen der Mehrzahl von Services, wobei die Anforderung eine Anforderung für Zugriff auf Inhalte aufweist, die von dem einen der Mehrzahl von Services bereitgestellt wurden, und wobei der zumindest eine Schaltkreis ferner konfiguriert ist zum Verschlüsseln der signierten Anforderung basierend zumindest auf dem einen der Mehrzahl von Sicherheitsschlüsseln, der dem einen der Mehrzahl von Services einspricht,
wobei die Anforderung einen Netzwerkidentifikator aufweist, der mit der Serviceakzessorvorrichtung (104A-B) verknüpft ist,
wobei der zumindest eine Schaltkreis (206) ferner konfiguriert ist zum:
Empfangen, von dem einer der Mehrzahl von Services, einer Bestätigung, dass der Anforderung stattgegeben wurde;
Bereitstellen, für die Serviceakzessorvorrichtung (104A-B), eine Indikation, dass die angeforderte Inhalte für die Serviceakzessorvorrichtung (104A-B) durch den mit der Serviceakzessorvorrichtung (104A-B) verknüpften Netzwerkidentifikator bereitgestellt werden;
Überwachen einer Nähe der Serviceakzessorvorrichtung (104A-B) zu der tragbaren Autorisierungsvorrichtung (102); und
Benachrichtigen von dem einen der Mehrzahl von Services, wenn die Serviceakzessorvorrichtung (104A-B) nicht in der Nähe der tragbaren Autorisierungsvorrichtung (102) ist.

2. Die tragbare Autorisierungsvorrichtung (102) gemäß Anspruch 1, wobei der zumindest eine Schaltkreis (206) ferner konfiguriert ist zum:
Empfangen, von dem einen der Mehrzahl von Services, eines Verschlüsselungsschlüssels zum Zugreifen auf die angeforderten Inhalte; und
Bereitstellen, für die Serviceakzessorvorrichtung (104A-B), des Verschlüsselungsschlüssels zum Zugreifen auf die angeforderten Inhalte.

3. Die tragbare Autorisierungsvorrichtung gemäß Anspruch 1, wobei der zumindest eine Schaltkreis (206) ferner konfiguriert ist zum:
Empfangen, von dem einen der Mehrzahl von Services, der angeforderten Inhalte, die mit dem einen der Mehrzahl von Sicherheitsschlüsseln verschlüsselt wurden;
Entschlüsseln der angeforderten Inhalte unter Verwendung von dem zumindest einen der Mehrzahl von Sicherheitsschlüsseln; und
Bereitstellen der entschlüsselten angeforderten Inhalte für die Serviceakzessorvorrichtung (104A-B).

4. Die tragbare Autorisierungsvorrichtung (102) gemäß einem jeden der Ansprüche 1 bis 3, wobei die Inhalte eine Benutzerschnittstellekonfiguration für die Serviceakzessorvorrichtung (104A-B) und/oder einen Audiostream und/oder einen Videostream aufweist.

5. Die tragbare Autorisierungsvorrichtung (102) gemäß einem jeden der vorhergehenden Ansprüche, wobei der zumindest eine Schaltkreis (206) ferner konfiguriert ist zum:
Entdecken der Serviceakzessorvorrichtung (104A-B); und
Bereitstellen einer Bake für Entdeckung durch die Serviceakzessorvorrichtung (104AB).

6. Die tragbare Autorisierungsvorrichtung (102) gemäß einem jeden der vorhergehenden Ansprüche, wobei der Speicher (208) ein sicheres Element (202) aufweist, das zum Speichern der Mehrzahl von Sicherheitsschlüsseln konfiguriert ist.

7. Die tragbare Autorisierungsvorrichtung (102) gemäß einem jeden der vorhergehenden Ansprüche, wobei die tragbare Autorisierungsvorrichtung (102) zur Befestigung an einem Körper einer Person konfiguriert ist und wobei der zumindest eine Schaltkreis (206) ferner konfiguriert ist zum:
Empfangen von zumindest einem biometrischen Datenelement von der Person; und
Authentifizieren der Person als einen autorisierten Benutzer der tragbaren Autorisierungsvorrichtung (102) basierend zumindest zum Teil auf dem zumindest einen biometrischen Datenelement.

8. Die tragbare Autorisierungsvorrichtung (102) gemäß einem jeden der vorhergehenden Ansprüche, wobei der Identifikator indikativ für eine Identität der tragbaren Autorisierungsvorrichtung (102) und/oder für eine Identität einer mit der tragbaren Autorisierungsvorrichtung (102) verknüpften Benutzer ist, und wobei der zumindest eine Schaltkreis (206) ferner konfiguriert ist zum:
Registrieren mit dem einen der Mehrzahl von Services unter Verwendung von zumindest dem Identifikator; und
Empfangen von dem einen der Mehrzahl von Sicherheitsschlüsseln, der dem einen der Mehrzahl von Services entspricht, nach dem Registrieren mit dem einen der Mehrzahl von Services.

9. Ein Computerprogrammprodukt, das Befehle aufweist, die in einem materiellen computerlesbaren Speichermedium gespeichert sind, wobei, wenn das Programm von einem System ausgeführt wird, das eine tragbare Autorisierungsvorrichtung (102) und eine Serviceakzessorvorrichtung (104A-B) aufweist, die Befehle bewirken, dass die die tragbare Autorisierungsvorrichtung (102) Folgendes durchführt:
Empfangen, von einer Serviceakzessorvorrichtung (104A-B) über eine erste Netzwerkverbindung, einer Anforderung für Zugriff auf einen Service, der von einem Serviceprovider (110A-C) bereitgestellt wird;
Authentifizieren mit einem Serviceprovider (110A-C) im Namen der Serviceakzessorvorrichtung (104A-B);
Benachrichtigen des Serviceproviders (110A-C), wenn die erste Netzwerkverbindung an die Serviceakzessorvorrichtung (104A-B) getrennt wurde;
Überwachen einer Entfernung von der Serviceakzessorvorrichtung (104A-B);
Beenden der ersten Netzwerkverbindung, wenn die Entfernung von der Serviceakzessorvorrichtung (104A-B) einen Schwellenwert überschreitet; und
Bewirken, dass die Serviceakzessorvorrichtung (104A-B) über eine zweite Netzwerkverbindung zwischen dem Serviceprovider (110A-C) und der Serviceakzessorvorrichtung (104A-B) auf einen Service zugreift, der von dem Serviceprovider (110A-C) bereitgestellt wird.

## Revendications

1. Dispositif d'autorisation portatif (102) comprenant
une mémoire (208) configurée pour mémoriser un identifiant et une pluralité de clés de sécurité correspondant à une pluralité de services associée à l'identifiant ; et
au moins un circuit (206) configuré pour :
recevoir, depuis un dispositif d'accès au service (104A-B), une demande d'accès à l'un de la pluralité de services ;
s'authentifier auprès de l'un de la pluralité de services à l'aide au moins de l'identifiant et de l'une de la pluralité de clés de sécurité correspondant à l'un de la pluralité de services ;
signer la demande en fonction au moins de l'une de la pluralité de clés de sécurité correspondant à l'un de la pluralité de services ; et
fournir la demande signée à l'un de la pluralité de services, la demande comprenant une demande d'accès à un contenu fourni par l'un de la pluralité de services et l'au moins un circuit est configuré en outre pour crypter la demande signée en fonction au moins de l'une de la pluralité de clés de sécurité correspondant à l'un de la pluralité de services, dans lequel la demande comprend un identifiant de réseau associé au dispositif d'accès au service (104A-B),
l'au moins un circuit (206) est configuré en outre pour :
recevoir, depuis l'un de la pluralité de services, une confirmation que la demande a été acceptée ;
fournir, au dispositif d'accès au service (104A-B), une indication que le contenu demandé sera fourni au dispositif d'accès au service (104A-B) par l'intermédiaire de l'identifiant de réseau associé au dispositif d'accès au service (104A-B) ;
contrôler une proximité du dispositif d'accès au service (104A-B) par rapport au dispositif d'autorisation portatif (102) ; et
notifier l'un de la pluralité de services quand le dispositif d'accès au service (104A-B) n'est pas proche du dispositif d'autorisation portatif (102).

2. Dispositif d'autorisation portatif (102) selon la revendication 1, dans lequel l'au moins un circuit (206) est configuré en outre pour :
recevoir, depuis l'un de la pluralité de services, une clé de cryptage pour accéder au contenu demandé; et
fournir, au dispositif d'accès au service (104A-B), la clé de cryptage pour accéder au contenu demandé.

3. Dispositif d'autorisation portatif selon la revendication 1, dans lequel l'au moins un circuit (206) est configuré en outre pour :
recevoir, depuis l'un de la pluralité de services, le contenu demandé crypté avec l'une de la pluralité de clés de sécurité ;
décrypter le contenu demandé à l'aide d'au moins l'une de la pluralité de clés de sécurité ; et
fournir le contenu demandé décrypté au dispositif d'accès au service (104A-B).

4. Dispositif d'autorisation portatif (102) selon l'une quelconque des revendications 1 à 3, dans lequel le contenu comprend au moins l'un : d'une configuration d'interface utilisateur pour le dispositif d'accès au service, d'un flux audio ou d'un flux vidéo.

5. Dispositif d'autorisation portatif (102) selon l'une quelconque des revendications précédentes, dans lequel l'au moins un circuit (206) est configuré en outre pour :
découvrir le dispositif d'accès au service (104A-B) ; et
fournir une balise pour la découverte par le dispositif d'accès au service (104A-B).

6. Dispositif d'autorisation portatif (102) selon l'une quelconque des revendications précédentes, dans lequel la mémoire (208) comprend un élément sécurisé (202) configuré pour mémoriser la pluralité de clés de sécurité.

7. Dispositif d'autorisation portatif (102) selon l'une quelconque des revendications précédentes, dans lequel le dispositif d'autorisation portatif (102) est configuré pour être attaché au corps d'une personne et l'au moins un circuit (206) est configuré en outre pour :
recevoir au moins un élément de données biométriques de la personne ; et
authentifier la personne en tant qu'utilisateur autorisé du dispositif d'autorisation portatif (102) en fonction au moins en partie de l'au moins un élément de données biométriques.

8. Dispositif d'autorisation portatif (102) selon l'une quelconque des revendications précédentes, dans lequel l'identifiant indique une identité d'au moins l'un du dispositif d'autorisation portatif (102) ou d'un utilisateur associé au dispositif d'autorisation portatif (102) et l'au moins un circuit (206) est configuré en outre pour :
s'enregistrer auprès de l'un de la pluralité de services à l'aide au moins de l'identifiant ; et
recevoir l'une de la pluralité de clés de sécurité correspondant à l'un de la pluralité de services à l'enregistrement auprès de l'un de la pluralité de services.

9. Produit de programme informatique comprenant des instructions mémorisées dans un support de mémorisation tangible lisible par ordinateur, les instructions, quand le programme est exécuté par un système comprenant un dispositif d'autorisation portatif (102) et un dispositif d'accès au service (104A-B), amenant le dispositif d'autorisation portatif (102) à :
recevoir, depuis un dispositif d'accès au service (104A-B) par l'intermédiaire d'une première connexion de réseau, une demande d'accès à un service fourni par un fournisseur de services (110A-C) ;
s'authentifier auprès d'un fournisseur de services (110A-C) pour le compte du dispositif d'accès au service (104A-B) ;
notifier le fournisseur de services (110A-C) quand la première connexion de réseau avec le dispositif d'accès au service (104A-B) a été déconnectée ;
contrôler une distance par rapport au dispositif d'accès au service (104A-B) ;
couper la première connexion de réseau quand la distance par rapport au dispositif d'accès au service (104A-B) dépasse un seuil ; et
amener le dispositif d'accès au service (104A-B) à accéder à un service fourni par le fournisseur de services (110A-C) par l'intermédiaire d'une seconde connexion de réseau entre le fournisseur de services (110A-C) et le dispositif d'accès au service (104A-B) .
